# FASCICULE DE BREVET EUROPEEN

(11) **EP 4 036 310 B1**
(45) Date de publication et mention de la délivrance du brevet: **11.10.2023**
(21) Numéro de dépôt: 22153198.1
(22) Date de dépôt: 25.01.2022
(51) Int. Cl.: E01H 5/06

(54) **REMORQUE DE DENEIGEMENT A MOYENS DE DETECTION D'UN VEHICULE TIERS**
SCHNEERÄUMANHÄNGER MIT MITTELN ZUR ERKENNUNG EINES DRITTFAHRZEUGS
SNOW-REMOVAL TRAILER WITH MEANS FOR DETECTING A THIRD-PARTY VEHICLE

(30) Priorité: 28.01.2021 FR 2100788
(43) Date de publication de la demande: 03.08.2022
(73) Titulaire: SOVIAR, 74190 Passy (FR)
(72) Inventeur: BENEDETTI, Michel, 74190 Passy (FR)
(74) Mandataire: Cabinet Poncet

(56) Documents cités:
- EP-A1- 3 196 361
- US-B2- 9 944 318

## Description

### DOMAINE TECHNIQUE DE L'INVENTION

La présente invention concerne le déneigement des voies de circulation routières, et concerne plus particulièrement une remorque de déneigement destinée à être tractée par un véhicule à attelage de remorquage.

Pour déneiger simultanément plusieurs files d'une voie de circulation à l'aide d'un seul véhicule tracteur, on connaît une remorque de déneigement telle que décrite dans le document US 2006/0143952 A1, comportant :
- un châssis s'allongeant longitudinalement selon une direction de châssis entre une extrémité antérieure de châssis et une extrémité postérieure de châssis, et se développant transversalement entre un premier côté de châssis et un deuxième côté de châssis opposés l'un à l'autre,
- une lame de déneigement portée le long du premier côté de châssis,
- au moins une roue agencée pour porter le châssis sur un sol, un essieu de ladite roue étant sélectivement orientable par des moyens d'orientation entre une première position de roue, dans laquelle un axe de l'essieu autour duquel tourne la roue est perpendiculaire à la direction de châssis, et au moins une deuxième position de roue, dans laquelle l'axe de l'essieu autour duquel tourne la roue fait avec la direction de châssis un angle d'essieu qui est supérieur à 90°,
- un timon d'attelage apte à relier l'extrémité antérieure de châssis à l'attelage de remorquage du véhicule tracteur.

Une autre remorque de déneigement est décrite dans le document EP 3 196 361 A1.

Le document US 9,944,318 B2 décrit un système de direction des roues arrières adapté à une utilisation sur un véhicule automatisé, ledit système comprenant un détecteur d'objet, un actionneur et un contrôleur. Lors d'un virage, le détecteur d'objet est utilisé pour détecter un éventuel objet situé à proximité du côté du véhicule et à l'intérieur du virage exclusivement. Si un objet est détecté, l'actionneur est utilisé pour ajuster un angle de direction arrière des roues arrières du véhicule pour éviter l'objet lorsque le véhicule hôte se déplace.

En deuxième position de roue, la remorque de déneigement est déportée latéralement et orientée de façon oblique par rapport à la direction de progression du véhicule tracteur.

On constate que certains conducteurs de véhicules tiers ont tendance à vouloir tenter un dépassement des engins de déneigement. Dans le cas présent, en particulier lorsque les conditions de visibilité sont mauvaises, certains progressent jusqu'à longer la remorque et parviennent juste derrière le véhicule tracteur. Il en résulte que la remorque peut alors venir balayer le véhicule tiers et le pousser latéralement si ladite au moins une roue est ramenée de façon intempestive de sa seconde position vers sa première position de roue, par exemple par un ordre du conducteur du véhicule tracteur.

### EXPOSE DE L'INVENTION

Un problème proposé par la présente invention est de limiter les risques lorsque la remorque de déneigement se trouve orientée de façon oblique par rapport à la direction de progression du véhicule tracteur par actionnement des moyens d'orientation de ladite au moins une roue.

Pour atteindre ces objets ainsi que d'autres, l'invention propose une remorque de déneigement destinée à être tractée par un véhicule tracteur à attelage de remorquage, ladite remorque de déneigement comportant :
- un châssis s'allongeant longitudinalement selon une direction de châssis entre une extrémité antérieure de châssis et une extrémité postérieure de châssis, et se développant transversalement entre un premier côté de châssis et un deuxième côté de châssis opposés l'un à l'autre,
- une lame de déneigement portée le long du premier côté de châssis,
- au moins une roue agencée pour porter le châssis sur un sol, un essieu de ladite roue étant sélectivement orientable par des moyens d'orientation entre une première position de roue, dans laquelle un axe de l'essieu autour duquel tourne la roue est perpendiculaire à la direction de châssis, et au moins une deuxième position de roue, dans laquelle l'axe de l'essieu autour duquel tourne la roue fait avec la direction de châssis un angle d'essieu qui est supérieur à 90°,
- un timon d'attelage apte à relier l'extrémité antérieure de châssis à l'attelage de remorquage du véhicule tracteur ;
en outre, selon l'invention, ladite remorque de déneigement comporte des moyens de détection, aptes à générer un signal de présence lorsque :
- la roue est dans une deuxième position de roue, et
- un objet ou une personne se trouve dans une aire latérale et/ou une aire postérieure au deuxième côté de châssis.

Avec une telle remorque de déneigement selon l'invention, le signal de présence permet d'alerter le chauffeur du véhicule tracteur pour que celui-ci s'abstienne d'actionner les moyens d'orientation en raison de ce qu'un véhicule tiers se trouve dans une position dangereuse (c'est-à-dire dans l'aire latérale et/ou l'aire postérieure au deuxième côté de châssis) par rapport à la remorque de déneigement. En alternative ou en complément, le signal de présence peut être utilisé pour alerter le conducteur du véhicule tiers que celui-ci se trouve dans une position dangereuse afin qu'il s'éloigne du véhicule tracteur et de la remorque de déneigement.

Avantageusement, on peut prévoir que :
- ladite remorque de déneigement comporte des moyens d'inhibition aptes à inhiber les moyens d'orientation,
- les moyens d'inhibition et les moyens de détection sont agencés de telle sorte que lorsque la roue est en une deuxième position de roue et que les moyens de détection génèrent un signal de présence, les moyens d'inhibition empêchent tout actionnement des moyens d'orientation tendant à orienter l'essieu depuis la deuxième position de roue vers la première position de roue.

L'actionnement des moyens d'orientation est ainsi rendu impossible lorsque les moyens de détection détectent un véhicule tiers placé dans une position dangereuse (c'est-à-dire dans l'aire latérale et/ou l'aire postérieure au deuxième côté de châssis). Ainsi, la sécurité est assurée même en cas d'inattention du conducteur du véhicule tracteur.

Selon l'invention, l'aire latérale au deuxième côté du châssis comprend une partie au moins du secteur angulaire que doit balayer le deuxième côté du châssis pour que l'essieu passe de la deuxième position de roue à la première position de roue.

En pratique, l'aire postérieure au deuxième côté du châssis peut avantageusement se trouver à une distance inférieure à une distance prédéterminée de l'extrémité postérieure du deuxième côté du châssis.

De préférence, la remorque de déneigement peut comporter des moyens d'avertissement, aptes à générer un signal d'avertissement perceptible par une personne détectée par les moyens de détection, de préférence un signal d'avertissement visuel et/ou sonore, lorsque les moyens de détection génèrent un signal de présence.

Le signal de présence est ainsi utilisé pour alerter le conducteur du véhicule tiers que celui-ci se trouve dans une position dangereuse, afin qu'il s'éloigne du véhicule tracteur et de la remorque de déneigement.

Avantageusement, les moyens de détection comportent au moins un capteur à ultrasons. Les moyens de détection ont ainsi une structure simple et aisée à implanter et à régler, comme les dispositifs d'aide au stationnement des véhicules automobiles.

De préférence, on peut prévoir que :
- les moyens de détection comprennent un capteur disposé au voisinage de l'extrémité postérieure du deuxième coté du châssis,
- ledit capteur est agencé pour détecter un objet ou une personne autour d'une direction moyenne de détection orientée de façon oblique à l'écart du deuxième coté du châssis et de l'extrémité antérieure du châssis.

Une telle orientation du capteur permet de surveiller de façon simple une aire latérale et/ou une aire postérieure au deuxième côté de châssis.

Avantageusement, les moyens de détection génèrent un signal de présence si un objet ou une personne détecté(e) se trouve, vis-à-vis du capteur, à une distance inférieure à une distance maximale qui est une fonction croissante de l'angle d'essieu.

En adaptant ainsi la distance de détection du capteur en fonction de l'angle d'essieu, on évite de générer des signaux de présence intempestifs (voire de bloquer la commande des moyens d'orientation) lorsque c'est la glissière latérale de la chaussée qui est détectée.

Pour éviter ce problème de détection de la glissière latérale de la chaussée, on peut en alternative prévoir que :
- les moyens de détection ne génèrent pas de signal de présence lorsque l'angle d'essieu est inférieur à une valeur d'angle minimale prédéterminée, ou
- les signaux de présence sont inhibés lorsque l'angle d'essieu est inférieur à ladite valeur d'angle minimale prédéterminée.

Le fait de ne pas générer de signal de présence ou d'inhiber les signaux de présence lorsque l'angle d'essieu est faible n'est pas trop dommageable : un véhicule tiers aurait de toute façon trop peu de place pour approcher et se placer dans l'aire latérale.

Selon un autre aspect de la présente invention, il est proposé un ensemble de déneigement comportant :
- un véhicule tracteur,
- une remorque de déneigement telle que précédemment décrite,
- des moyens d'alarme, aptes à générer un signal d'alarme perceptible par un opérateur situé dans la cabine de pilotage du véhicule tracteur, de préférence un signal d'alarme visuel et/ou sonore, lorsque les moyens de détection génèrent un signal de présence.

On avertit ainsi de façon fiable le chauffeur du véhicule tracteur pour que celui-ci s'abstienne d'actionner les moyens d'orientation en raison de ce qu'un véhicule tiers se trouve dans une position dangereuse (c'est-à-dire dans l'aire latérale et/ou l'aire postérieure au deuxième côté de châssis) par rapport à la remorque de déneigement.

L'utilisation d'un signal d'alarme visuel et/ou sonore est préférentielle car le chauffeur du véhicule tracteur a beaucoup de choses à surveiller : la bonne tenue et la trajectoire du véhicule tracteur sur la chaussée, la trajectoire de la remorque de déneigement par rapport au bord de la chaussée, l'orientation de la lame de déneigement que porte généralement le véhicule tracteur, les éventuelles substances à projeter sur la chaussée (sel, sable, etc.), la présence éventuelle d'obstacles sur la chaussée ou au bord de celle-ci, etc.

De préférence, les moyens d'alarme peuvent comprendre :
- des moyens de caméra orientés sur une aire latérale et/ou postérieure au moins en partie située à proximité du deuxième côté de châssis,
- des moyens d'affichage, disposés dans la cabine de pilotage du véhicule tracteur et aptes à recevoir et afficher des images provenant des moyens de caméra.

Les moyens de caméra permettent de donner une vision claire au chauffeur du véhicule tracteur de ce qui se passe dans l'aire latérale et/ou l'aire postérieure au deuxième côté de châssis.

Avantageusement, l'affichage des images par les moyens d'affichage peut être déclenché seulement lorsque les moyens de détection génèrent un signal de présence, et ce afin de ne pas distraire inutilement le chauffeur qui a déjà beaucoup de choses à surveiller.

Selon un autre aspect de la présente invention, il est proposé l'utilisation d'une remorque de déneigement telle que précédemment décrite ou d'un ensemble de déneigement tel que précédemment décrit, utilisation lors de laquelle les moyens de détection n'effectuent de surveillance dans l'aire latérale et/ou l'aire postérieure au deuxième côté de châssis que lorsque la roue est dans une deuxième position de roue. Il n'est ainsi effectué de surveillance (et généré de signal de présence) que lorsqu'il existe un risque qu'un véhicule tiers ou une personne tierce s'introduise dans l'aire latérale ou dans l'aire postérieure. On limite ainsi les risques d'alertes inutiles.

Selon un autre aspect de la présente invention, il est proposé l'utilisation d'une remorque de déneigement telle que précédemment décrite ou d'un ensemble de déneigement tel que précédemment décrit, utilisation lors de laquelle les moyens de détection n'effectuent de surveillance sur les côtés du châssis que dans l'aire latérale comprenant une partie au moins du secteur angulaire que doit balayer le deuxième côté du châssis pour que l'essieu passe de la deuxième position de roue à la première position de roue. Une surveillance n'est ainsi effectuée que sur le côté qui importe. Il n'y a pas de détection sur l'autre (premier) côté du châssis pour ne pas induire en erreur l'opérateur par un excès de signaux de présence.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue schématique de dessus d'un ensemble de déneigement comprenant une remorque de déneigement selon la présente invention, dont ladite au moins une roue est en première position de roue ;
[Fig.2] La figure 2 est une vue schématique de dessus d'une partie de la remorque de déneigement de l'ensemble de déneigement de la figure 1 ;
[Fig.3] La figure 3 est une vue schématique de dessus de l'ensemble de déneigement avec la remorque de déneigement dont ladite au moins une roue est en deuxième position de roue ;
[Fig.4] La figure 4 est une vue schématique de dessus d'une partie de la remorque de déneigement de l'ensemble de déneigement de la figure 3 ; et
[Fig.5] La figure 5 est une vue schématique illustrant le fonctionnement des moyens de détection de la remorque de déneigement.

### DESCRIPTION DES MODES DE REALISATION PREFERES

Lorsque des références numériques identiques sont utilisées dans plusieurs modes de réalisation de l'invention, ces références numériques désignent des éléments identiques ou similaires dans chacun des modes de réalisation.

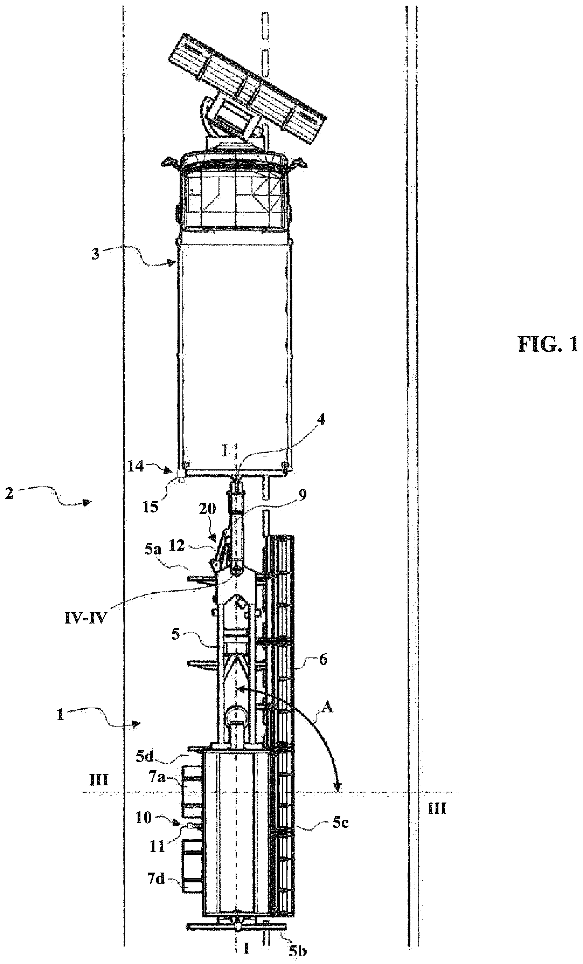

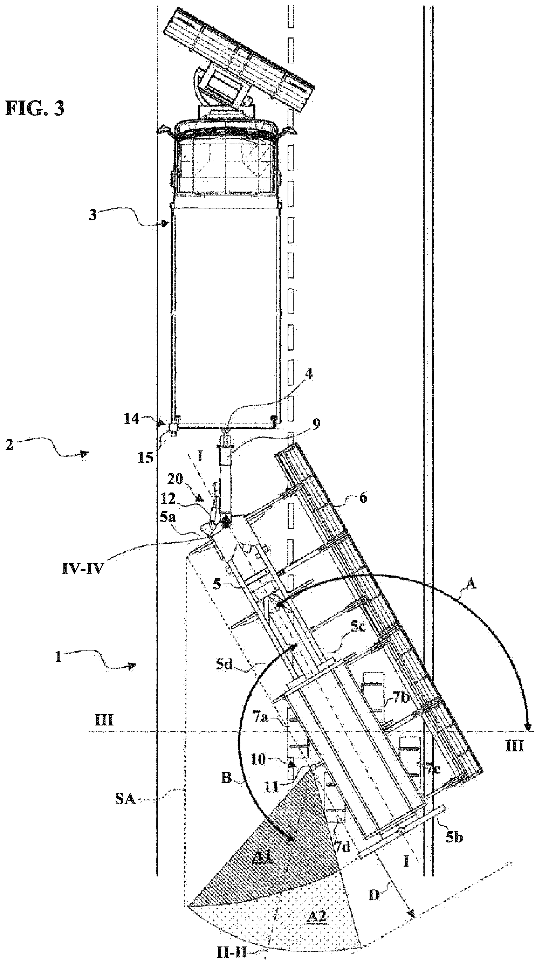

Sur les figures 1 à 5 est illustré un exemple de mode de réalisation de remorque de déneigement 1 selon la présente invention, utilisée dans un ensemble de déneigement 2 sur les figures 1 et 3 comprenant en outre un véhicule tracteur 3 la tractant.

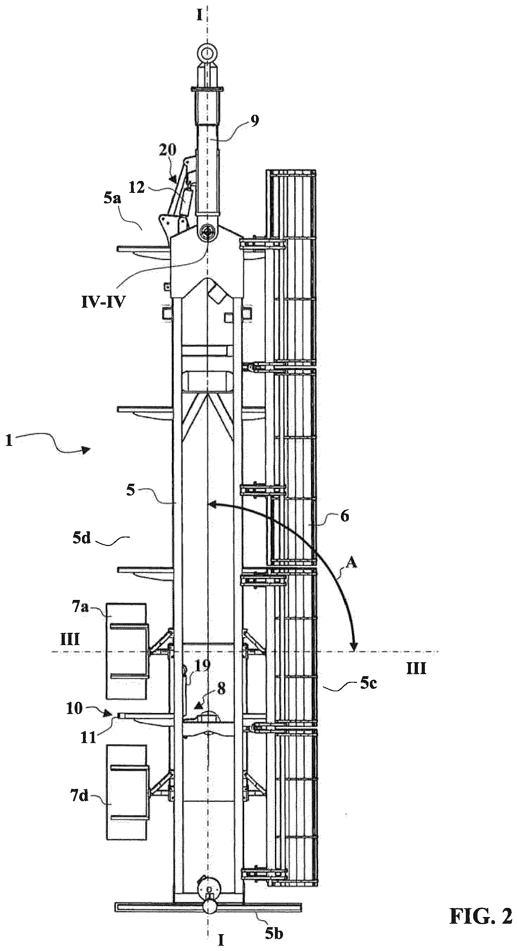

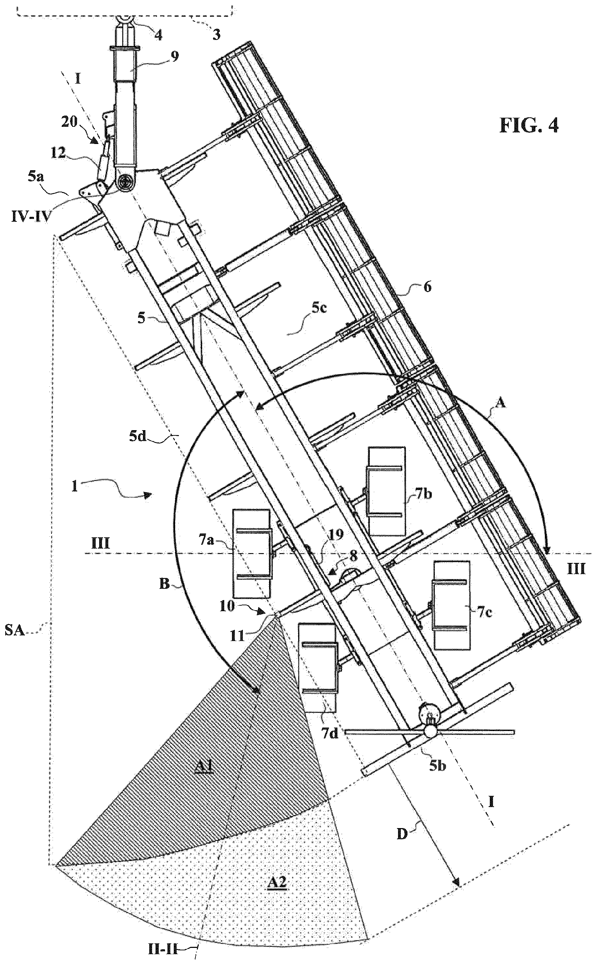

La remorque de déneigement est du type pivotante entre une position de transport (figures 1 et 2) et une position de déneigement (figures 3 et 4), comme par exemple décrite dans les documents US 2006/0143952 A1 et EP 3 196 361 A1.

La remorque de déneigement 1 est destinée à être tractée par le véhicule tracteur 3 à attelage de remorquage 4. Ladite remorque de déneigement 1 comporte :
- un châssis 5 s'allongeant longitudinalement selon une direction de châssis I-I entre une extrémité antérieure de châssis 5a et une extrémité postérieure de châssis 5b, et se développant transversalement entre un premier côté de châssis 5c et un deuxième côté de châssis 5d opposés l'un à l'autre,
- une lame de déneigement 6 portée le long du premier côté de châssis 5c,
- quatre roues 7a à 7d agencées pour porter le châssis 5 sur un sol, les essieux des roues 7a à 7d étant sélectivement orientables par des moyens d'orientation 8 entre une première position de roues (figures 1 et 2), dans laquelle les axes d'essieu autour desquels tournent les roues 7a à 7d sont perpendiculaires à la direction de châssis I-I (figures 1 et 2), et au moins une deuxième position de roue (figures 3 et 4), dans laquelle les axes d'essieu autour desquels tournent les roues 7a à 7d font avec la direction de châssis I-I un angle d'essieu A qui est différent de (supérieur à) 90° (figures 3 et 4),
- un timon d'attelage 9 apte à relier l'extrémité antérieure de châssis 5a à l'attelage de remorquage 4 du véhicule tracteur 3.

Les moyens d'orientation 8 comprennent notamment un vérin hydraulique 19 à double effet plus particulièrement visible sur les figures 2 et 4.

Dans le cas présent, la remorque de déneigement 1 est similaire à celle décrite dans le document EP 3 196 361 A1, avec un timon d'attelage 9 articulé à pivotement par rapport à l'extrémité antérieure de châssis 5a autour d'une direction IV-IV qui est perpendiculaire au plan défini par la direction de châssis I-I et la direction selon laquelle se développe transversalement la remorque de déneigement 1 entre un premier côté de châssis 5c et un deuxième côté de châssis 5d. Des moyens de pivotement 20 permettent de sélectivement déplacer à pivotement le châssis 5 par rapport au timon d'attelage 9, et de fixer la position angulaire relative du châssis 5 et du timon d'attelage 9 comme on peut le voir par comparaison des figures 1 et 2 avec les figures 3 et 4. Les moyens de pivotement 20 comprennent notamment un vérin hydraulique 12 à double effet plus particulièrement visible sur les figures 2 et 4.

La remorque de déneigement 1 comporte des moyens de détection 10, aptes à générer un signal de présence lorsque :
- les roues 7a à 7d sont dans une deuxième position de roue, et
- un objet ou une personne se trouve dans une aire A1 latérale et/ou une aire A2 postérieure au deuxième côté de châssis 5d.

On voit plus particulièrement sur les figures 3 et 4 que l'aire A1 latérale au deuxième côté du châssis comprend une partie au moins du secteur angulaire SA (dont les contours sont en traits discontinus) que doit balayer le deuxième côté du châssis 5d pour que l'essieu passe de la deuxième position de roue (figures 3 et 4) à la première position de roue (figures 1 et 2).

En outre, on voit que l'aire A2 postérieure au deuxième côté du châssis 5d se trouve à une distance inférieure à une distance prédéterminée D de l'extrémité postérieure du deuxième côté du châssis 5d.

Si un véhicule tiers tente pénétrer dans le secteur angulaire SA, il est au minimum détecté par les moyens de détection 10 lorsqu'il pénètre dans l'aire A1. Ici, le véhicule tiers est même détecté avant même de parvenir le long du deuxième côté de châssis 5d, dès qu'il pénètre dans l'aire A2 postérieure. Ainsi, en l'absence de signal de présence, les moyens d'orientation 8 peuvent être actionnés sereinement, sans risque pour un véhicule tiers. Si un véhicule tiers pénètre dans l'une des aires A1 et A2, il est détecté et le chauffeur du véhicule tracteur peut être averti pour qu'il n'actionne pas les moyens d'orientation 8.

Dans un mode de réalisation particulier, la remorque de déneigement 1 comporte des moyens d'inhibition aptes à inhiber les moyens d'orientation 8. Les moyens d'inhibition et les moyens de détection 10 sont alors agencés de telle sorte que lorsque les roues 7a à 7d sont en une deuxième position de roue et que les moyens de détection 10 génèrent un signal de présence, les moyens d'inhibition empêchent tout actionnement des moyens d'orientation 8 tendant à orienter les essieux depuis la deuxième position de roue (figures 3 et 4) vers la première position de roue (figure 1 et 2). On empêche ainsi un déplacement de la remorque de déneigement 1 susceptible de provoquer une collision avec le véhicule tiers.

Dans le mode de réalisation illustré sur les figures, les moyens de détection 10 comportent au moins un capteur 11 (figures 3 et 4) à ultrasons tel que ceux utilisés dans le secteur automobile pour l'assistance au stationnement (parfois aussi appelé communément « radar de recul »).

Le capteur 11 est disposé au voisinage de l'extrémité postérieure du deuxième coté du châssis 5d (un peu en amont le long de la direction de châssis I-I, en direction de l'extrémité antérieure de châssis 5a). Ledit capteur 11 est agencé pour détecter un objet ou une personne autour d'une direction moyenne de détection II-II orientée de façon oblique à l'écart du deuxième coté du châssis 5d et de l'extrémité antérieure du châssis 5a. Ici, la direction moyenne de détection II-II forme un angle B avec la direction du châssis I-I compris entre 90° et 180°.

Il importe que le déplacement de la remorque de déneigement 1 (ou le chauffeur du véhicule tracteur 3 qui manoeuvre la remorque de déneigement 1) ne soit pas perturbé par la détection intempestive d'une glissière de sécurité bordant la chaussée du côté du deuxième côté de châssis 5d.

Pour ce faire, une première possibilité consiste à prévoir que les moyens de détection 10 génèrent un signal de présence si un objet ou une personne détecté(e) se trouve, vis-à-vis du capteur 11, à une distance inférieure à une distance maximale DMax qui est une fonction croissante de l'angle d'essieu A. En d'autres termes, on diminue la distance à laquelle peut être détecté(e) un objet ou une personne lorsque l'angle d'essieu A revient vers 90° (et donc que la remorque de déneigement 1 revient dans le prolongement de la trajectoire du véhicule tracteur 3).

Une deuxième possibilité consiste à prévoir que les signaux de présence sont inhibés lorsque l'angle d'essieu A est inférieur à une valeur d'angle minimale prédéterminée Amin.

Une troisième possibilité, ici préférée et mise en oeuvre dans le mode de réalisation des figures 1 à 5, consiste à prévoir que les moyens de détection 10 ne génèrent pas de signal de présence lorsque l'angle d'essieu A est inférieur à une valeur d'angle minimale prédéterminée Amin.

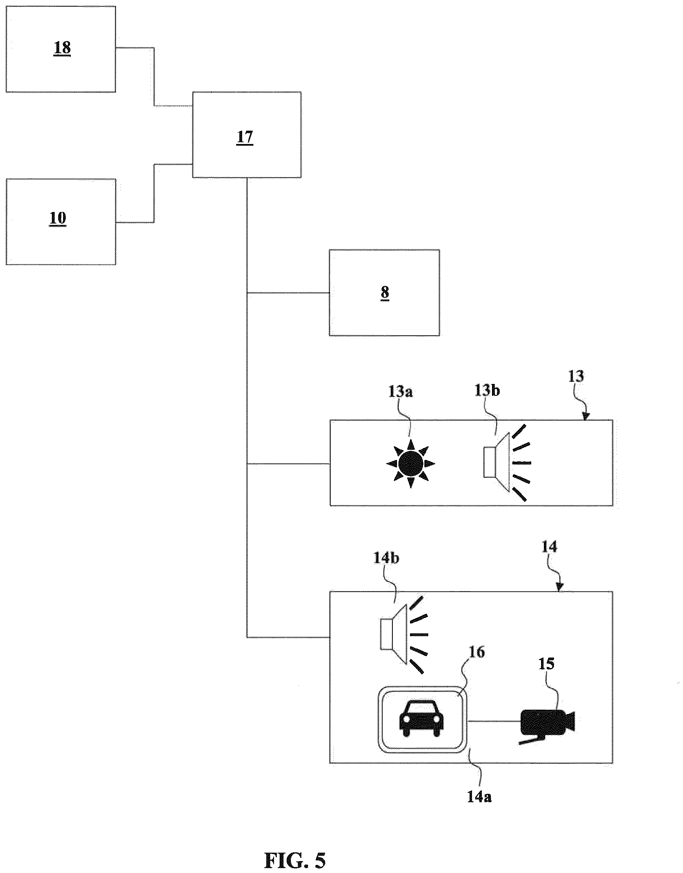

Sur la figure 5, sont schématiquement illustrés :
- des moyens d'avertissement 13, aptes à générer un signal d'avertissement perceptible par une personne détectée par les moyens de détection 10. Dans le cas présent, les moyens d'avertissement 13 comprennent un générateur de signal d'avertissement visuel 13a (un feu clignotant ou fixe) et un générateur de signal d'avertissement sonore 13b qui génèrent respectivement un signal visuel et un signal sonore lorsque les moyens de détection 10 génèrent un signal de présence. Les moyens d'avertissement sont portés par la remorque de déneigement 1 ;
- des moyens d'alarme 14, aptes à générer un signal d'alarme perceptible par un opérateur situé dans la cabine de pilotage du véhicule tracteur 3. En pratique, les moyens d'alarme 14 comprennent un générateur de signal d'avertissement visuel 14a et un générateur de signal d'avertissement sonore 14b qui génèrent respectivement un signal visuel et un signal sonore lorsque les moyens de détection 10 génèrent un signal de présence.

Dans le cas présent, pour générer un signal d'avertissement visuel les moyens d'alarme 14 comprennent :
- des moyens de caméra 15 orientés sur l'aire latérale A1 et/ou l'aire A2 postérieure au moins en partie située à proximité du deuxième côté de châssis 5d. Les moyens de caméra 15 sont portés par le véhicule tracteur 3. Ils pourraient en alternative être portés par la remorque de déneigement 1 ;
- des moyens d'affichage 16, disposés dans la cabine de pilotage du véhicule tracteur 3 et aptes à recevoir et afficher des images provenant des moyens de caméra 15.

L'affichage des images par les moyens d'affichage 16 peut être déclenché seulement lorsque les moyens de détection 10 génèrent un signal de présence, et ce afin de ne pas distraire inutilement le chauffeur qui a déjà beaucoup de choses à surveiller.

Sur la figure 5 sont également présents des moyens de commande 17 et des moyens de mesure 18 de l'angle d'essieu A. La mesure de l'angle d'essieu A peut être effectuée de différentes manières, par exemple par la mesure de la course du vérin hydraulique 19.

Le fonctionnement de la remorque de déneigement 1 va désormais être explicité en lien avec les figures 1 à 5.

La remorque de déneigement 1 se trouve initialement tractée derrière le véhicule tracteur 3 (position de transport) avec un angle d'essieu A de 90° : les axes d'essieu autour desquels tournent les roues 7a à 7d sont parallèle à une direction III-III et font avec la direction de châssis I-I un angle d'essieu A qui est égal à 90°.

Lorsqu'un déneigement doit être effectué, les moyens d'orientation 8 sont pilotés de façon à augmenter l'angle d'essieu A pour amener les roues 7a à 7d vers la deuxième position de roue (figures 3 et 4 - position de déneigement de la remorque de déneigement 1) : les axes d'essieu autour desquels tournent les roues 7a à 7d sont parallèle à une direction III-III et font avec la direction de châssis I-I un angle d'essieu A qui est supérieur à 90°. La lame de déneigement 6 est simultanément ou subséquemment abaissée au contact de la chaussée.

A partir d'un angle d'essieu Amin prédéterminé (en pratique dès qu'il est créé un espace suffisant pour qu'un véhicule tiers puisse se glisser le long du deuxième côté de châssis 5d) repéré par les moyens de mesure 18 de l'angle d'essieu A, les moyens de commande 17 activent les moyens de détection 10.

Selon une autre approche, les moyens de détection 10 n'effectuent de surveillance dans l'aire A1 latérale et/ou l'aire A2 postérieure au deuxième côté de châssis 5d que lorsque les roues 7a-7d sont dans une deuxième position de roue. Il n'est ainsi effectué de surveillance (et généré d'éventuel signal de présence) que lorsqu'il existe un risque qu'un véhicule tiers ou une personne tierce s'introduise dans l'aire A1 latérale ou dans l'aire A2 postérieure. On limite ainsi les risques d'alertes inutiles.

Comme illustré sur les figures 3 et 4, les moyens de détection 10 n'effectuent de surveillance sur les côtés du châssis que dans l'aire A1 latérale comprenant une partie au moins du secteur angulaire SA que doit balayer le deuxième côté du châssis 5d pour que l'essieu passe de la deuxième position de roue à la première position de roue.

Si un véhicule tiers s'approche imprudemment de la remorque de déneigement 1 en pénétrant dans l'une et/ou l'autre des aires A1 et A2, les moyens de détection génèrent un signal de présence qui est communiqué aux moyens de commande 17.

Les moyens de commande 17 pilotent alors les moyens d'avertissement 13 qui génèrent, à l'attention du conducteur du véhicule tiers, un signal visuel (allumage d'un feu fixe ou clignotant) au moyen du générateur de signal d'avertissement visuel 13a et génèrent un signal sonore au moyen du générateur de signal d'avertissement sonore 13b.

Simultanément, les moyens de commande 17 pilotent les moyens d'alarme 14 pour avertir le chauffeur dans la cabine du véhicule tracteur 3 de la présence du véhicule tiers :
- le générateur de signal d'avertissement sonore 13b émet un signal sonore, et
- les moyens de caméra 15 transmettent des images qu'affichent les moyens d'affichage 16.

Le chauffeur du véhicule tracteur 3, dûment averti de la présence du véhicule tiers, s'abstient alors de tout actionnement des moyens d'orientation 8 tendant à orienter l'essieu depuis la deuxième position de roue (figures 3 et 4) vers la première position de roue (figures 1 et 2). Une collision avec le véhicule tiers est ainsi évitée.

Lorsque les opérations de déneigement sont achevées, ou lorsqu'un obstacle doit être franchi, le chauffeur du véhicule tracteur actionne les moyens d'orientation dans le sens tendant à orienter l'essieu depuis la deuxième position de roue (figures 3 et 4) vers la première position de roue (figures 1 et 2) pour ramener la remorque de déneigement 1 en position de transport. En l'absence d'objet ou d'une personne dans les aires A1 et A2, les moyens de détection n'émettent pas de signal de présence. Par ailleurs, en-deçà dudit angle d'essieu Amin prédéterminé repéré par les moyens de mesure 18 de l'angle d'essieu A, les moyens de commande 17 désactivent les moyens de détection 10 pour que la remorque de déneigement achève son retour dans la position de transport illustrée sur les figures 1 et 2 sans qu'une détection intempestive de la glissière bordant la chaussée ne trouble le chauffeur et/ou la manoeuvre de la remorque de déneigement 1.

La présente invention n'est pas limitée aux modes de réalisation qui ont été explicitement décrits, mais elle en inclut les diverses variantes et généralisations contenues dans le domaine des revendications ci-après.

## Revendications

1. Remorque de déneigement (1) destinée à être tractée par un véhicule tracteur (3) à attelage de remorquage (4), ladite remorque de déneigement (1) comportant :
- un châssis (5) s'allongeant longitudinalement selon une direction de châssis (I-I) entre une extrémité antérieure de châssis (5a) et une extrémité postérieure de châssis (5b), et se développant transversalement entre un premier côté de châssis (5c) et un deuxième côté de châssis (5d) opposés l'un à l'autre,
- une lame de déneigement (6) portée le long du premier côté de châssis (5c),
- au moins une roue (7a-7d) agencée pour porter le châssis (5) sur un sol, un essieu de ladite roue (7a-7d) étant sélectivement orientable par des moyens d'orientation (8) entre une première position de roue, dans laquelle un axe de l'essieu autour duquel tourne la roue (7a-7d) est perpendiculaire à la direction de châssis (I-I), et au moins une deuxième position de roue, dans laquelle l'axe de l'essieu autour duquel tourne la roue (7a-7d) fait avec la direction de châssis (I-I) un angle d'essieu (A) qui est supérieur à 90°,
- un timon d'attelage (9) apte à relier l'extrémité antérieure de châssis (5a) à l'attelage de remorquage (4) du véhicule tracteur (3), **caractérisée par**
- des moyens de détection (10), aptes à générer un signal de présence lorsque :
a. la roue (7a-7d) est dans une deuxième position de roue, et
b. un objet ou une personne se trouve dans une aire (A1) latérale et/ou une aire (A2) postérieure au deuxième côté de châssis (5d), où l'aire (A1) latérale au deuxième côté du châssis (5d) comprend une partie au moins du secteur angulaire (SA) que doit balayer le deuxième côté du châssis (5d) pour que l'essieu passe de la deuxième position de roue à la première position de roue.

2. Remorque de déneigement (1) selon la revendication 1,
**caractérisée en ce que** :
- ladite remorque de déneigement (1) comporte des moyens d'inhibition aptes à inhiber les moyens d'orientation (8),
- les moyens d'inhibition et les moyens de détection (10) sont agencés de telle sorte que lorsque la roue (7a-7d) est en une deuxième position de roue et que les moyens de détection (10) génèrent un signal de présence, les moyens d'inhibition empêchent tout actionnement des moyens d'orientation (8) tendant à orienter l'essieu depuis la deuxième position de roue vers la première position de roue.

3. Remorque de déneigement (1) selon l'une des revendications 1 ou 2, **caractérisée en ce que** l'aire (A2) postérieure au deuxième côté du châssis (5d) se trouve à une distance inférieure à une distance prédéterminée (D) de l'extrémité postérieure du deuxième côté du châssis (5d).

4. Remorque de déneigement (1) selon l'une quelconque des revendications 1 à 3, **caractérisée en ce qu'**elle comporte des moyens d'avertissement (13), aptes à générer un signal d'avertissement perceptible par une personne détectée par les moyens de détection (10), de préférence un signal d'avertissement visuel et/ou sonore, lorsque les moyens de détection (10) génèrent un signal de présence.

5. Remorque de déneigement (1) selon l'une quelconque des revendications 1 à 4, **caractérisée en ce que** les moyens de détection (10) comportent au moins un capteur (11) à ultrasons.

6. Remorque de déneigement (1) selon l'une quelconque des revendications 1 à 5, **caractérisée en ce que** :
- les moyens de détection (10) comprennent un capteur (11) disposé au voisinage de l'extrémité postérieure du deuxième coté du châssis (5d),
- ledit capteur (11) est agencé pour détecter un objet ou une personne autour d'une direction moyenne de détection (II-II) orientée de façon oblique à l'écart du deuxième coté du châssis (5d) et de l'extrémité antérieure du châssis (5a).

7. Remorque de déneigement (1) selon la revendication 6, **caractérisée en ce que** les moyens de détection (10) génèrent un signal de présence si un objet ou une personne détecté(e) se trouve, vis-à-vis du capteur (11), à une distance inférieure à une distance maximale qui est une fonction croissante de l'angle d'essieu (A).

8. Remorque de déneigement (1) selon l'une quelconque des revendications 1 à 6, **caractérisée en ce que** :
- les moyens de détection (10) ne génèrent pas de signal de présence lorsque l'angle d'essieu (A) est inférieur à une valeur d'angle minimale prédéterminée (Amin), ou
- les signaux de présence sont inhibés lorsque l'angle d'essieu (A) est inférieur à ladite valeur d'angle minimale prédéterminée (Amin).

9. Ensemble de déneigement (2) comportant :
- un véhicule tracteur (3),
- une remorque de déneigement (1) selon l'une quelconque des revendications 1 à 8,
- des moyens d'alarme (14), aptes à générer un signal d'alarme perceptible par un opérateur situé dans la cabine de pilotage du véhicule tracteur (3), de préférence un signal d'alarme visuel et/ou sonore, lorsque les moyens de détection (10) génèrent un signal de présence.

10. Ensemble de déneigement (2) selon la revendication 9, **caractérisé en ce que** les moyens d'alarme (14) comprennent :
- des moyens de caméra (15) orientés sur une aire (A1) latérale et/ou une aire (A2) postérieure au moins en partie située à proximité du deuxième côté de châssis (5d),
- des moyens d'affichage (16), disposés dans la cabine de pilotage du véhicule tracteur (3) et aptes à recevoir et afficher des images provenant des moyens de caméra (15).

11. Utilisation d'une remorque de déneigement (1) selon l'une quelconque des revendications 1 à 8 ou d'un ensemble de déneigement (2) selon l'une des revendications 9 ou 10, **caractérisée en ce que** les moyens de détection (10) n'effectuent de surveillance dans l'aire (A1) latérale et/ou l'aire (A2) postérieure au deuxième côté de châssis (5d) que lorsque la roue (7a-7d) est dans une deuxième position de roue.

12. Utilisation selon la revendication 11, **caractérisée en ce que** l'aire (A1) latérale au deuxième côté du châssis (5d) comprend une partie au moins du secteur angulaire (SA) que doit balayer le deuxième côté du châssis (5d) pour que l'essieu passe de la deuxième position de roue à la première position de roue.

13. Utilisation selon l'une des revendications 11 ou 12, **caractérisée en ce que** l'aire (A2) postérieure au deuxième côté du châssis (5d) se trouve à une distance inférieure à une distance prédéterminée (D) de l'extrémité postérieure du deuxième côté du châssis (5d).

14. Utilisation d'une remorque de déneigement (1) selon l'une quelconque des revendications 1 à 8 ou d'un ensemble de déneigement (2) selon l'une des revendications 9 ou 10, **caractérisée en ce que** les moyens de détection (10) n'effectuent de surveillance sur les côtés du châssis que dans l'aire (A1) latérale comprenant une partie au moins du secteur angulaire (SA) que doit balayer le deuxième côté du châssis (5d) pour que l'essieu passe de la deuxième position de roue à la première position de roue.

## Patentansprüche

1. Schneeräumanhänger (1), der dafür vorgesehen ist, von einem Zugfahrzeug (3) mit einer Anhängerkupplung (4) gezogen zu werden, wobei besagter Schneeräumanhänger (1) aufweist:
- einen Rahmen (5), der sich in Längsrichtung entlang einer Rahmenrichtung (I-I) zwischen einem vorderen Rahmenende (5a) und einem hinteren Rahmenende (5b) erstreckt und quer zwischen einer ersten Rahmenseite (5c) und einer zweiten gegenüberliegenden Rahmenseite (5d) verläuft,
- ein Schneeräumschild (6), das längs einer Rahmenseite (5c) getragen wird,
- mindestens ein Rad (7a-7d), das so angeordnet ist, dass es den Rahmen (5) auf einem Boden trägt, wobei eine Radachse des besagten Rades (7a-7d) durch Orientierungsmittel (8) selektiv zwischen einer ersten Radposition orientierbar ist, in der der Achsstift der Radachse, um die sich das Rad (7a-7d) dreht, senkrecht zur Rahmenrichtung (I-I) ist und mindestens einer zweiten Radposition orientierbar ist, in der der Achsstift der Radachse, um die sich das Rad (7a-7d) dreht, mit der Rahmenrichtung (I-I) einen Radachswinkel (A) einschließt, der größer als 90° ist,
- eine Kupplungsdeichsel (9), die in der Lage ist, das vordere Rahmenende (5a) mit der Anhängerkupplung (4) des Zugfahrzeugs (3) zu verbinden, **gekennzeichnet, durch**
- Erfassungsmittel (10), die in der Lage sind, ein Präsenzsignal zu generieren, wenn:
a. das Rad (7a-7d) sich in einer zweiten Radposition befindet, und
b. ein Objekt oder eine Person sich in einem Seitenbereich (A1) und/oder einem Bereich (A2) hinter der zweiten Rahmenseite (5d) befindet,
wobei der Bereich (A1) seitlich der zweiten Rahmenseite (5d) zumindest einen Teil des Winkelsektors (SA) umfasst, der von der zweiten Rahmenseite (5d) für den Übergang der Radachse von der zweiten Radposition zur ersten Radposition zurückgelegt werden muss.

2. Schneeräumanhänger (1) nach Anspruch 1, **dadurch gekennzeichnet, dass**:
- besagter Schneeräumanhänger (1) Sperrmittel aufweist, die in der Lage sind, die Orientierungsmittel (8) zu sperren,
- die Sperrmittel und die Erfassungsmittel (10) so angeordnet sind, dass, wenn sich das Rad (7a-7d) in einer zweiten Radposition befindet und die Erfassungsmittel (10) ein Präsenzsignal generieren, die Sperrmittel jede Betätigung der Orientierungsmittel (8) verhindern, die dazu dienen, die Radachse von der zweiten Radposition hin zu der ersten Radposition zu orientieren.

3. Schneeräumanhänger (1) nach einem der Ansprüche 1 oder 2, **dadurch gekennzeichnet, dass** sich der Bereich (A2) hinter der zweiten Rahmenseite (5d) weniger als einen vorgegebenen Abstand (D) vom hinteren Ende der zweiten Rahmenseite (5d) befindet.

4. Schneeräumanhänger (1) nach einem der Ansprüche 1 bis 3, **dadurch gekennzeichnet, dass** er Warnmittel (13) aufweist, die in der Lage sind, ein Warnsignal zu generieren, das für eine von den Erfassungsmitteln (10) erfasste Person wahrnehmbar ist, vorzugsweise ein visuelles und/oder akustisches Warnsignal, wenn die Erfassungsmittel (10) ein Präsenzsignal generieren.

5. Schneeräumanhänger (1) nach einem der Ansprüche 1 bis 4, **dadurch gekennzeichnet, dass** die Erfassungsmittel (10) mindestens einen Ultraschallsensor (11) aufweisen.

6. Schneeräumanhänger (1) nach einem der Ansprüche 1 bis 5, **dadurch gekennzeichnet, dass**:
- die Erfassungsmittel (10) einen Sensor (11) umfassen, der benachbart des hinteren Endes der zweiten Rahmenseite (5d) angeordnet ist,
- der besagte Sensor (11) so angeordnet ist, dass er ein Objekt oder eine Person in einer mittleren Erfassungsrichtung (II-II) erkennt, die schräg von der zweiten Rahmenseite (5d) und dem vorderen Rahmenende (5a) weg orientiert ist.

7. Schneeräumanhänger (1) nach Anspruch 6, **dadurch gekennzeichnet, dass** die Erfassungsmittel (10) ein Präsenzsignal generieren, wenn sich ein erfasstes Objekt oder eine erfasste Person gegenüber dem Sensor (11) in einem Abstand befindet, der kleiner ist als ein maximaler Abstand, der eine zunehmende Funktion des Achswinkels (A) ist.

8. Schneeräumanhänger (1) nach einem der Ansprüche 1 bis 6, **dadurch gekennzeichnet, dass**:
- die Erfassungsmittel (10) kein Präsenzsignal generieren, wenn der Achswinkel (A) kleiner als ein vorgegebener Wert eines Minimalwinkels (Amin) ist oder
- die Präsenzsignale gesperrt werden, wenn der Achswinkel (A) kleiner als der vorgegebene Wert des besagten Minimalwinkels (Amin) ist.

9. Schneeräumanordnung(2) aufweisend:
- ein Zugfahrzeug (3),
- ein Schneeräumanhänger (1) nach einem der Ansprüche 1 bis 8,
- Alarmmittel (14), die in der Lage sind, ein für einen in der Führerkabine des Zugfahrzeugs (3) befindlichen Bediener wahrnehmbares Alarmsignal, vorzugsweise ein visuelles und/oder akustisches Alarmsignal, zu generieren, wenn die Erfassungsmittel (10) ein Präsenzsignal generieren.

10. Schneeräumanordnung (2) nach Anspruch 9, **dadurch gekennzeichnet, dass** die Alarmmittel (14) umfassen:
- Kameramittel (15), die auf einen seitlichen Bereich (A1) und/oder einen hinteren Bereich (A2) orientiert sind, der zumindest teilweise in der Nähe der zweiten Rahmenseite (5d) angeordnet ist,
- Anzeigemittel (16), die in der Führerkabine des Zugfahrzeugs (3) angeordnet und in der Lage sind, Bilder zu empfangen und anzuzeigen, die von den Kameramitteln (15) stammen.

11. Verwendung eines Schneeräumanhängers (1) nach einem der Ansprüche 1 bis 8 oder einer Schneeräumanordnung (2) nach einem der Ansprüche 9 oder 10, **dadurch gekennzeichnet, dass** die Erfassungsmittel (10) lediglich eine Überwachung in dem seitlichen Bereich (A1) und/oder dem Bereich (A2) hinter der zweiten Rahmenseite (5d) durchführen, wenn das Rad (7a-7d) in einer zweiten Radposition ist.

12. Verwendung nach Anspruch 11, **dadurch gekennzeichnet, dass** der Bereich (A1) seitlich der zweiten Rahmenseite (5d) mindestens einen Teil des Winkelsektors (SA) umfasst, der von der zweiten Rahmenseite (5d) für den Übergang der Radachse von der zweiten Radposition zur ersten Radposition zurückgelegt werden muss.

13. Verwendung nach einem der Ansprüche 11 oder 12, **dadurch gekennzeichnet, dass** der Bereich (A2) hinter der zweiten Rahmenseite (5d) in einem Abstand liegt, der kleiner ist als ein vorgegebener Abstand (D) vom hinteren Ende der zweiten Rahmenseite (5d).

14. Verwendung eines Schneeräumanhängers (1) nach einem der Ansprüche 1 bis 8 oder einer Schneeräumanordnung (2) nach einem der Ansprüche 9 oder 10, **dadurch gekennzeichnet, dass** die Erfassungsmittel (10) eine Überwachung Rahmenseiten lediglich im seitlichen Bereich (A1) durchführen, der mindestens einen Teil des Winkelsektors (SA) umfasst, der von der zweiten Rahmenseite (5d) für den Übergang der Radachse von der zweiten Radposition zur ersten Radposition zurückgelegt werden muss.

## Claims

1. Snow-clearing trailer (1) intended to be towed by a towing vehicle (3) with a towing hitch (4), said snow-clearing trailer (1) comprising:
- a chassis (5) extending longitudinally in a chassis direction (I-I) between a chassis anterior end (5a) and a chassis posterior end (5b), and developing transversely between a chassis first side (5c) and a chassis second side (5d) which are opposite one another,
- a snow-clearing blade (6) borne along the chassis first side (5c),
- at least one wheel (7a-7d) designed to support the chassis (5) on the ground, an axle of said wheel (7a-7d) being selectively orientable by orientation means (8) between a first wheel position, in which an axis of the axle about which the wheel (7a-7d) rotates is perpendicular to the chassis direction (I-I), and at least a second wheel position, in which the axis of the axle about which the wheel (7a-7d) rotates makes with the chassis direction (I-I) an axle angle (A) greater than 90°,
- a drawbar (9) able to connect the chassis anterior end (5a) to the towing hitch (4) of the towing vehicle (3), **characterized by**
- detection means (10) able to generate a presence signal when:
a. the wheel (7a-7d) is in a second wheel position, and
b. an object or an individual is stationed in an area (A1) to the side and/or an area (A2) to the rear of the chassis second side (5d),
where the area (A1) to the side of the chassis second side (5d) comprises at least part of the angular sector (SA) that the chassis second side (5d) has to cut across in order for the axle to move from the second wheel position into the first wheel position.

2. Snow-clearing trailer (1) according to Claim 1, **characterized in that**:
- said snow-clearing trailer (1) comprises disabling means able to disable the orientation means (8),
- the disabling means and the detection means (10) are arranged in such a way that when the wheel (7a-7d) is in a second wheel position and the detection means (10) are generating a presence signal, the disabling means prevent any actuation of the orientation means (8) that might tend to orient the axle from the second wheel position into the first wheel position.

3. Snow-clearing trailer (1) according to either one of Claims 1 or 2, **characterized in that** the area (A2) to the rear of the chassis second side (5d) lies at a distance shorter than a predetermined distance (D) from the posterior end of the chassis second side (5d).

4. Snow-clearing trailer (1) according to any one of Claims 1 to 3, **characterized in that** it comprises warning means (13) able to generate a warning signal perceivable by an individual detected by the detection means (10), preferably a visual and/or audible warning signal, when the detection means (10) generate a presence signal.

5. Snow-clearing trailer (1) according to any one of Claims 1 to 4, **characterized in that** the detection means (10) comprise at least an ultrasound sensor (11).

6. Snow-clearing trailer (1) according to any one of Claims 1 to 5, **characterized in that**:
- the detection means (10) comprise a sensor (11) positioned in the vicinity of the posterior end of the chassis second side (5d),
- said sensor (11) is designed to detect an object or an individual around a mean detection direction (II-II) oriented obliquely away from the chassis second side (5d) and from the chassis anterior end (5a).

7. Snow-clearing trailer (1) according to Claim 6, **characterized in that** the detection means (10) generate a presence signal if a detected object or individual is stationed, with respect to the sensor (11), at a distance that is smaller than a maximum distance that is an increasing function of the axle angle (A).

8. Snow-clearing trailer (1) according to any one of Claims 1 to 6, **characterized in that**:
- the detection means (10) do not generate a presence signal when the axle angle (A) is smaller than a predetermined minimum angle value (Amin), or
- the presence signals are disabled when the axle angle (A) is smaller than said predetermined minimum angle value (Amin).

9. Snow-clearing assembly (2) comprising:
- a towing vehicle (3),
- a snow-clearing trailer (1) according to any one of Claims 1 to 8,
- alarm means (14) able to generate an alarm signal perceivable by an operator stationed in the driving cab of the towing vehicle (3), preferably a visual and/or audible alarm signal, when the detection means (10) generate a presence signal.

10. Snow-clearing assembly (2) according to Claim 9, **characterized in that** the alarm means (14) comprise:
- camera means (15) oriented over an area (A1) to the side and/or an area (A2) to the rear which is at least partially situated near the chassis second side (5d),
- display means (16), arranged in the driving cab of the towing vehicle (3) and able to receive and display images coming from the camera means (15).

11. Use of a snow-clearing trailer (1) according to any one of Claims 1 to 8 or of a snow-clearing assembly (2) according to either of Claims 9 or 10, **characterized in that** the detection means (10) monitor the area (A1) to the side and/or the area (A2) to the rear of the chassis second side (5d) only when the wheel (7a-7d) is in a second wheel position.

12. Use according to Claim 11, **characterized in that** the area (A1) to the side of the chassis second side (5d) comprises at least part of the angular sector (SA) that the chassis second side (5d) has to cut across in order for the axle to move from the second wheel position to the first wheel position.

13. Use according to either of Claims 11 or 12, **characterized in that** the area (A2) to the rear of the chassis second side (5d) lies at a distance smaller than the predetermined distance (D) from the posterior end of the chassis second side (5d).

14. Use of a snow-clearing trailer (1) according to any one of Claims 1 to 8 or of a snow-clearing assembly (2) according to either of Claims 9 or 10, **characterized in that** the detection means (10) monitor the sides of the chassis only in the area (A1) to the side comprising at least part of the angular sector (SA) that the chassis second side (5d) has to cut across in order for the axle to move from the second wheel position to the first wheel position.
